# EUROPEAN PATENT APPLICATION

(11) **EP 1 233 353 A2**
(43) Date of publication of application: **21.08.2002**
(21) Application number: 02251049.9
(22) Date of filing: 15.02.2002
(51) Int. Cl.: G06F 17/30

(54) **Data mining method and system**

(30) Priority: 19.02.2001 GB 0104052
(71) Applicant: Calaba Limited, Rothwell, Northamptonshire NN14 6JR (GB)
(72) Inventor: Carlyle, James, London EC1N 7SX (GB); Davis, Ian, Rothwell, Northamptonshire NN14 6JR (GB)
(74) Representative: Exell, Jonathan Mark

(57) **Abstract**

A data mining method and system for determining new relevant data from one or more data sources, the data of the data sources comprising pages of data linked together by links is described. The method comprises the steps of visiting the pages of data and obtaining links from the pages to other pages, processing the links in dependence on a predetermined set of rules to eliminate certain types of links, determining from the remaining links, links that existed on a previous visit to the page, eliminating previously existing links and preparing a report including the remaining links as potentially relevant data.

## Description

### Field of the invention

The present invention relates to a data mining method and system that is particularly applicable to the World Wide Web and the Internet.

### Background to the invention

The Internet and World Wide Web are growing at an astonishing rate. More and more people are using the Internet as a method of communicating, advertising and shopping for and purchasing goods. A large proportion of companies also have their own Web sites, indeed many also have company Intranets with content directed specifically to company members.

However, because the Internet, World Wide Web and, to some extents, Intranets are uncontrolled and contributed to by a variety of unconnected entities, the data available can change rapidly. New sites and pages can appear and disappear within days and the average user simply has to accommodate this. Furthermore, due to the large amount of data available from different sources and the rate at which this data may be updated, a user is faced with monitoring the sites on a regular basis in order to keep up to date with current news and information. However, it is often time-consuming for a user to visit all these sites.

In an effort to meet the needs of an average user of digesting the vast amounts of information on the web, companies have designed many systems to access, retrieve and utilize this information. One conventional system used to access this information more effectively is called a search engine. A search engine is actually a set of components accessible at a network site, commonly via the World Wide Web. A user of a search engine formulates a query comprising one or more keywords and submits the query to another component of the search engine. In response, the search engine inspects its own index files and displays a list of documents that match the search query, typically as hyperlinks. When a user activates one of the hyperlinks to see the information contained in the document, the user exits the site of the search engine and terminates the search process.

However, search engines themselves have drawbacks. A search engine is only as good as it index. Thus, where an index is not updated as often as a web site or where different terms are used to classify content to those searched on by a user, the search engine will not necessarily find new data and may give so-called broken hyperlinks to non-existent data. A further disadvantage, as far as the user is concerned, is that the user must operate the search engine in order to obtain the new data. Given the expanding number of search engines and their differing methods of classifying data, a user may have to use a number of search engines to obtain all the data required.

One type of program designed to overcome some of these disadvantages is called a "robot" or "spider". The program creates an autonomous or semi-autonomous process that traverses a network such as the World Wide Web in search of documents and data that satisfy pre-programmed criteria. The robot or spider then returns a list of the documents or Web pages the user may be interested in.

One particular application that robots and spiders are being used for is automated news generation. Robots and spiders are pre-programmed with the type of news the user is interested in and are set to traverse the World Wide Web, or predetermined parts of it, to find such news. On a predetermined regular interval, such as daily or weekly, the robot or spider presents a report of the new items it has found, for example by email.

However, robots, spiders and other so-called intelligent agents are limited by their own programming as to the types of Web pages they can process to determine new data items. Typically, the programming is format specific and set to determine changes to pre-determined areas within Web pages. The limitation of processing to certain areas prevents advertisements and similar content from being selected. Thus, in order to configure a robot or spider to traverse the Web pages of a data provider, sample pages are obtained and the areas to be processed are determined. The areas are added to the robot or spider's programming. Obviously, the way in which a robot or spider must be programmed limits its versatility. A change in the format of Web pages will result in erroneous or incomplete results until it is realised by the programmer and the programming is corrected.

### Statement of invention

According to one aspect of the present invention, there is provided a data mining method for determining new relevant data from one or more data sources, the data from the data sources comprising pages of data linked together by links, the method comprising the steps of:
visiting the pages of data and obtaining links from the pages to other pages;
processing the links in dependence on a predetermined set of rules to eliminate certain types of links;
determining from the remaining links, links that existed on previous visits to the page;
eliminating the previous existing links; and,
preparing a report including the remaining links as potentially relevant data.

By applying specific heuristic processing techniques to a data mining system, the quality of data obtained by automated extraction can be increased significantly. The resultant system and method are much more versatile and immune to format and content change than prior systems and methods.

The types of links to eliminate may include selected ones of links to other domains; links without textual content; links containing phrases requesting an action of a user such as 'click here', and links containing advertisements.

The method may further comprise the step of maintaining a database of links previously encountered, the step of comparing remaining links including the step of accessing the database to obtain links previously encountered and the step of preparing the report including the step of adding the remaining links to the database.

The method may further comprise the steps of:
(a) obtaining the underlying source code for the page;
(b) identifying the link within the source code;
(c) determining the closest formatting boundary surrounding the link;
(d) extracting textual content within the formatting boundary; and,
(e) if the length of the textual content is greater than the text of the link, including the textual content as a summary of the link in the report, otherwise repeating steps (d) and (e) on the next closest formatting boundary until set (e) is satisfied or until the formatting boundary is found to contain another link.

The method may further comprise the steps of:
obtaining the page referred to by a link;
generating a summary of the page in dependence on its content and title; and,
including the summary in the report.

The step of processing the links may include the steps of:
obtaining the underlying source code for the link's page;
identifying the link within the source code;
determining the closest formatting boundary surrounding the link;
extracting formatting commands associated with the link;
scoring the formatting commands in dependence on a predetermined scoring system; and,
eliminating the link if the score is below a predetermined level.

The method may further comprise the steps of:
extracting the text within the formatting boundary;
calculating the number of words in the text;
calculating the number of different words in the text; and,
scoring the number of words and number of different words in dependence on a predetermined scoring system.

A formatting boundary may be a paragraph or table cell.

According to another aspect of the present invention, there is provided a computer implemented data mining system comprising an automated agent arranged to access data sources and process data in accordance with the above method steps.

The automated agent may be a robot or spider and is arranged to access World Wide Web sites.

According to another aspect of the present invention, there is provided a data mining system arranged to traverse pages of selected World Wide Web sites and to obtain links to other pages from within the pages, the data mining system processing the links in dependence on a number of predetermined rules to select links that do not appear to be associated with advertisements and the like, wherein the data mining system includes a database of previously selected links, the data mining system being operative to compare selected links with the database to determine new links and to prepare and submit a report of new links to a user.

### Brief description of the drawings

An example of the present invention will now be described in detail with reference to the accompanying drawings in which:
Figure 1 is a schematic diagram of a data mining system according to the present invention;
Figures 2a to 2d are screen shots of Web pages and other data for illustrating data mining methods of the present invention;
Figure 3 is a flow chart of a data mining method used in the present invention; and,
Figure 4 is a code listing of html used to illustrate a preferred data mining method of the present invention.

### Detailed description

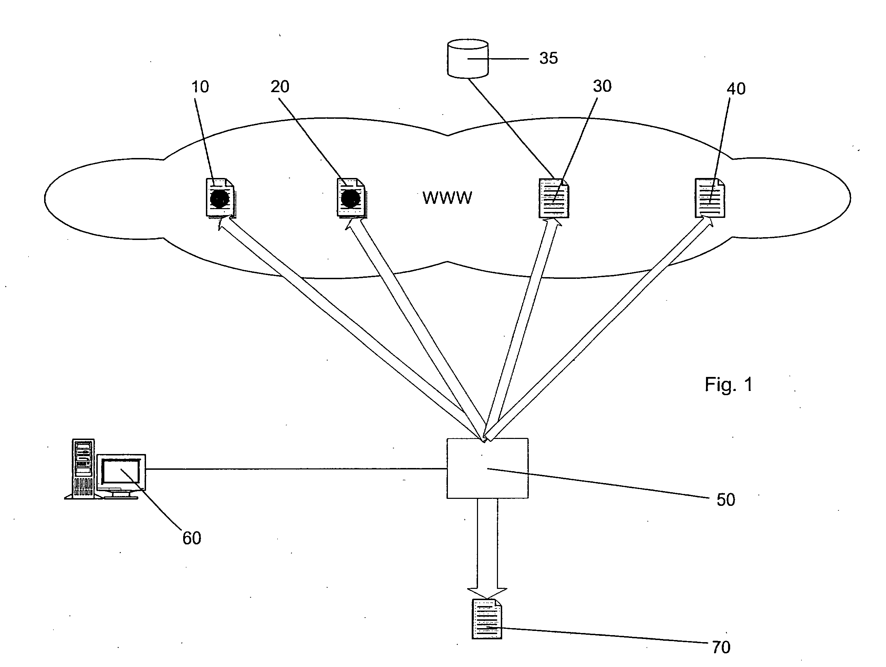

Figure 1 is a schematic diagram of a data mining system according to the present invention.

A number of Web pages 10-40 are traversed by an autonomous agent 50 operated by a server 55. The Web page may be, for example, simple html format 10, XML format 20, dynamic html 30 from queries applied to a database 35 or WML format 40.

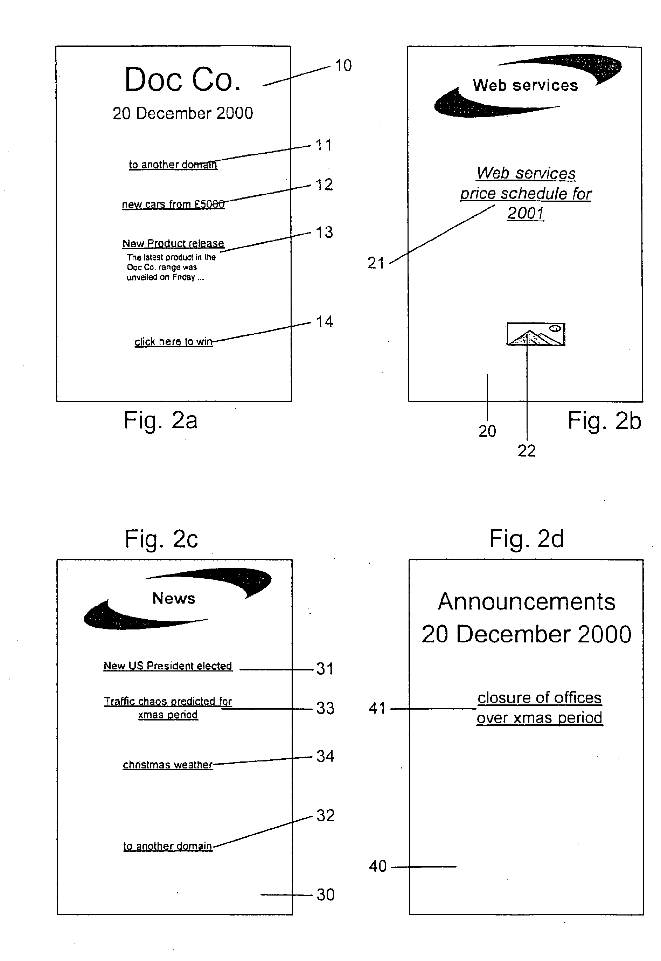

Figures 2a to 2d are screen shots of the Web pages 10-40.

In each case, the agent 50 visits the Web page 10-40 on a regular basis and extracts all links, such as hypertext links 11-14, 21-22, 31-34, 41, and processes them. The links are processed in accordance with a predetermined set of heuristic rules from which relevant links are obtained. The predetermined rules may be part of the agent's programming but are preferably stored in a database (possibly database 60) accessible by the agent. The following types of links may be rejected:
- links to other domains (11, 32)
- links without textual content (22)
- links containing the phrase 'click here' (14)
- links containing advertisements and variations (12)

Surviving links 13, 21, 31, 33, 34, 41 are compared against a database 60, maintained by the agent 50, of links that existed on a previous visit and duplications (13, 31) are also eliminated. The database 60 may store the links encountered in the latest visit, links encountered in visits going back a predetermined period of time or all links ever encountered.

The remaining links are formatted into a report 70 by the agent for submission to the user. The report 70 may be held on a server (not shown) and be accessible to the user via a Web page (not shown) or it may be sent via email or some other transmission medium.

In a preferred feature of the present invention, the agent 50 may be configured to extract summaries of the data associated with links that are not rejected.

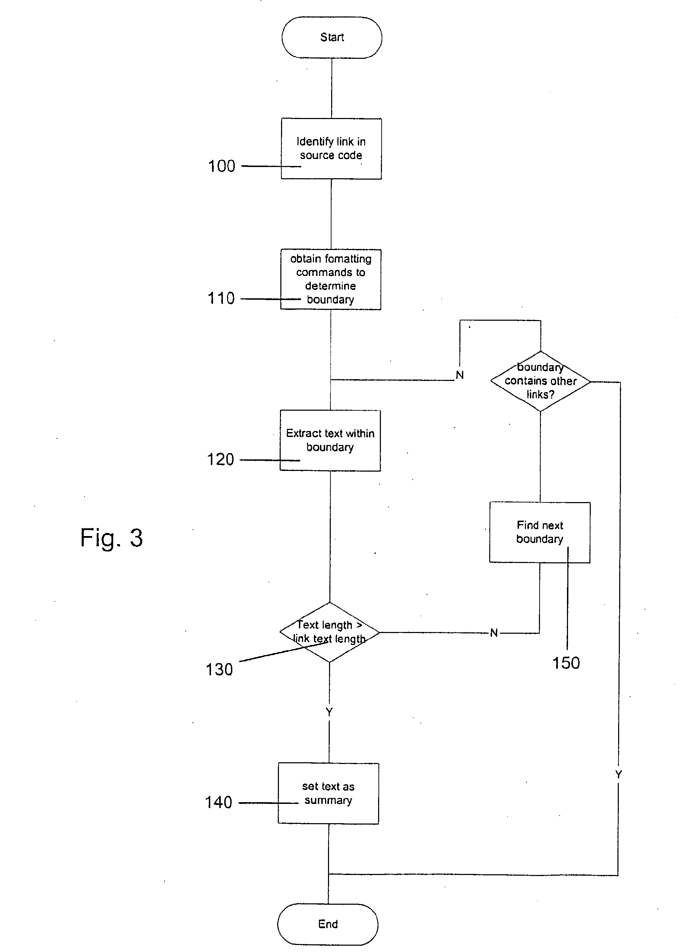

Figure 3 is a flow chart of this data mining method. The underlying html, WML or other source code for a Web page containing the link is obtained and processed. In step 100 the link is identified in the source code. From this reference point, step 110 examines the formatting commands immediately around the link to identify a block element such as a paragraph (<p>...</p> in html) or a table cell (<td>...</td> in html) that can be used to determine a boundary around the link. If such a boundary is found, any textual content within the enclosing commands is extracted in step 120. If the extracted text is found in step 130 to be larger than the length of the text of the link itself, the extracted text is set as the summary in step 140, otherwise the next closest set of enclosing formatting commands is determined in step 150 and steps 120-140 are repeated until step 130 is satisfied or until the enclosing formatting commands include another link.

The agent 50 may also be configured to retrieve the page the link refers to and to generate a summary based on the page's title and content using standard summation techniques.

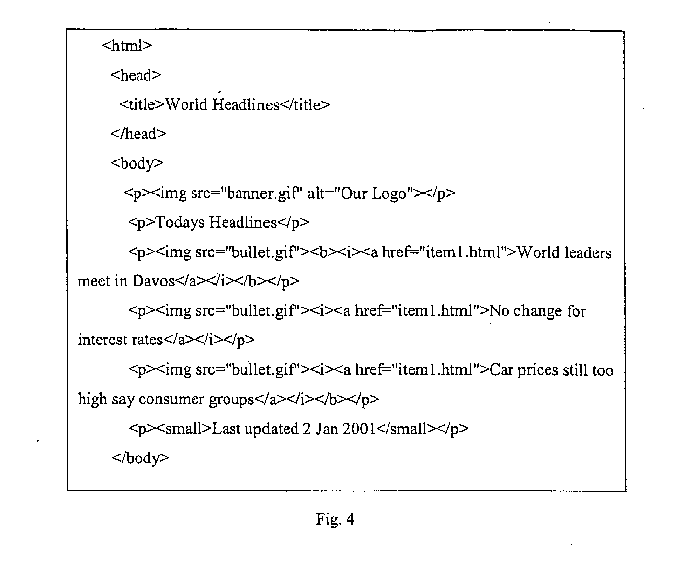

Figure 4 is a code listing of html used to illustrate a preferred data mining method of the present invention.

As has been highlighted above, Web pages are written using a structured mark-up language, such as html or WML. A data mining method according to the present invention uses this structure to analyse the content of the pages.

Mark-up languages use structures in the form of sequences of mark-up tags that define a hierarchy. For example, the structure <p><img><b><i> in html indicates that the following text is part of a paragraph (<p>), is preceded by an image (<img>) and is in bold (<b>) and italics (<i>).

According to a preferred aspect of the present invention, each mark-up tag is assigned an emphasis score. For example, the tag <b> indicating a bold font may be assigned an emphasis score +1.5, whereas the tag <small>, indicating that a smaller font than usual should be used may be given an emphasis score -2. Changes in colour of text are also noted and scored relative to the page's foreground and background colours. The relative difference between font and background colours is also scored. High contrast differences, such as black on white, or vice versa, results in a high score, low contrast differences, such as grey on white, are scored lower. The existence of a link within the structure may be scored in a similar manner to the system described with reference to Figures 1 and 2, rejected links having a negative score, accepted ones a positive score.

Each structure is processed in dependence on the sum emphasis score of its components. For each structure, the average number of words in the text within the structure is calculated. In addition, a measure of the diversity of words present in the structure is calculated by dividing the number of unique words by the total number of words.

The structure is compared with a number of predefined criteria including:
- No. times the structure appears in the Page
- Average number of words between bounding values
- Word diversity
- Average No. words
- emphasis score

For the average number of words between bounding values, structures with more than a set number of words, for example 15, are likely to be parts of articles or prose whilst structures with 3 or less words are likely to be navigational elements. Structures with a number of words in between are more likely to be selected as they are more likely to be headlines.

If the structure exceeds a number of set threshold levels, it is considered to be a good candidate for containing important news or other data and is selected for reporting to the user.

This process may be repeated on child structures within a selected structure to determine likely headlines, summary text and the like, the predefined criteria varying depending on what it is thought the structure may contain. A repeating structure within structures is a likely candidate for a headline or a summary of a headline. The text of a structure may be extracted and associated with headlines and/or links already extracted for reporting to a user.

Figure 4 is a code listing of html used to illustrate a preferred data mining method of the present invention.

From Figure 4, a number of text containing structures can be identified. The scoring rules may include:

| html tag | score | effect tag has on structure |
|---|---|---|
| <b> | +1.5 | bold formatting |
| <i> | +1.5 | italic formatting |
| <small> | -1 | reduces font size |

The structures of Figure 4 would then be scored as follows:

| Structure | Score |
|---|---|
| <p>Todays Headlines</p> | 0 |
| <p><img src="bullet.gif'><b><i><a href="item1.html">World leaders meet in Davos</a></i></b></p> | 3 |
| <p><img src="bullet.gif'><i><a href="item1.html">No change for interest rates</a></i></p> | 1.5 |
| <p><img src="bullet.gif'><i><a href="iteml.html">Car prices still too high say consumer groups</a></i></b></p> | 1.5 |
| <p><small>Last updated 2 Jan 2001</small></p> | -1 |

In this example, the actual headlines have a score of 1.5 or more and would be selected as being relevant from these scores. The title and details of when the page was last updated would be ignored due to their low or negative scores.

## Claims

1. A data mining method for determining new relevant data from one or more data sources, the data of the data sources comprising pages of data linked together by links, the method comprising the steps of:
visiting the pages of data and obtaining links from the pages to other pages; processing the links in dependence on a predetermined set of rules to eliminate certain types of links;
determining from the remaining links, links that existed on a previous visit to the page;
eliminating previously existing links; and,
preparing a report including the remaining links as potentially relevant data.

2. A method according to claim 1, in which the types of links to eliminate include selected ones of:
links to other domains; links without textual content; links containing phrases requesting an action of a user; and links containing advertisements.

3. A method according to claim 1 or 2, further comprising the step of maintaining a database of links existing on a previous visit, the step of determining remaining links including the step of accessing the database to obtain links previously existing and the step of preparing the report including the step of adding the remaining links to the database.

4. A method according to any one of claims 1 to 3, further comprising the steps of:
(a) obtaining the underlying source code for the page;
(b) identifying the link within the source code;
(c) determining the closest formatting boundary surrounding the link;
(d) extracting textual content within the formatting boundary; and,
(e) if the length of the textual content is greater than the text of the link, including the textual content as a summary of the link in the report, otherwise repeating steps (d) and (e) on the next closest formatting boundary until set (e) is satisfied or until the formatting boundary is found to contain another link.

5. A method according to any preceding claim, further comprising the steps of:
obtaining the page referred to by a link;
generating a summary of the page in dependence on its content and title; and, including the summary in the report.

6. A method according to any preceding claim, in which the step of processing the links includes the steps of:
obtaining the underlying source code for the link's page;
identifying the link within the source code;
determining the closest formatting boundary surrounding the link;
extracting formatting commands associated with the link;
scoring the formatting commands in dependence on a predetermined scoring system; and,
eliminating the link if the score is below a predetermined level.

7. A method according to claim 6, further comprising the steps of:
extracting the text within the formatting boundary;
calculating the number of words in the text;
calculating the number of different words in the text; and,
scoring the number of words and number of different words in dependence on a predetermined scoring system.

8. A method according to claim 4, 6 or 7, in which a formatting boundary is a paragraph or table cell.

9. A computer implemented data mining system comprising an automated agent arranged to access data sources and process data in accordance with the method of any one of the preceding claims.

10. A computer implemented data mining system according to claim 9, in which the automated agent is a robot or spider and is arranged to access World Wide Web sites.

11. A data mining system arranged to traverse pages of selected World Wide Web sites and to obtain links to other pages from within the pages, the data mining system processing the links in dependence on a number of predetermined rules to select links that do not appear to be associated with advertisements, wherein the data mining system includes a database of previously selected links, the data mining system being operative to compare selected links with the database to determine new links and to prepare and submit a report of new links to a user.

12. A computer program comprising computer program code means for performing all the steps of any of claims 1 to 9 when said program is run on a computer.

13. A computer program as claimed in claim 12 embodied on a computer readable medium.
